# EUROPÄISCHE PATENTANMELDUNG

(11) **EP 4 506 934 A1**
(43) Veröffentlichungstag der Anmeldung: **12.02.2025**
(21) Anmeldenummer: 24191534.7
(22) Anmeldetag: 29.07.2024
(51) Int. Cl.: G10K 11/16

(54) **FLÜSSIGKEITSSCHALLDÄMPFER FÜR EIN ROHR**

(30) Priorität: 09.08.2023 DE 102023121243
(71) Anmelder: thyssenkrupp Marine Systems GmbH, 24143 Kiel (DE); thyssenkrupp AG, 45143 Essen (DE)
(72) Erfinder: Fischer, Jan Niklas, 24782 Büdelsdorf (DE); Zätsch, Carsten, 24106 Kiel (DE); Jessen, Marius, 24256 Fargau-Pratjau (DE); Decker, Thorben, 24119 Kronshagen (DE); Laudi, Sebastian, 24232 Schönkirchen (DE); Friedland, Falko, 24113 Kiel (DE); Heidersdorf, Lars, 24357 Fleckeby (DE); Landsberg-Bastian, Nina, 24145 Kiel (DE)
(74) Vertreter: thyssenkrupp Intellectual Property GmbH

(57) **Zusammenfassung**

Die vorliegende Erfindung betrifft einen Flüssigkeitsschalldämpfer 10, wobei der Flüssigkeitsschalldämpfer 10 ein inneres Flüssigkeitsvolumen 31 für eine durchfließende Flüssigkeit aufweist, wobei der Flüssigkeitsschalldämpfer 10 ein äußeres Gehäuse 32, 33, 34 aufweist, wobei der Flüssigkeitsschalldämpfer 10 ein das innere Flüssigkeitsvolumen 31 umgebendes Dämpfungselement 40 aufweist, dadurch gekennzeichnet, dass das Dämpfungselemente 40 Hohlräume 42 zur Anpassung der Dämpfungscharakteristik des Dämpfungselements 40 aufweist.

## Beschreibung

Die Erfindung betrifft einen Schalldämpfer zur Dämpfung des Schalls, welcher sich in einer Flüssigkeit ausbreitet, in einem flüssigkeitsdurchflossenen Rohr.

Bei Unterseebooten ist insbesondere die Schallabgabe an die Umgebung eine sehr wichtige Größe, da dadurch eine Ortung leicht möglich ist. Es besteht daher regelmäßig die Aufgabe, Schallentstehung oder Schallausbreitung zu verhindern.

Schallquellen sind beispielsweise Pumpen, welche Wasser, beispielsweise zu Kühlungszwecken durch das Boot fördern. Durch den Betrieb der Pumpe kann somit Schall erzeugt und auf das Kühlwasser übertragen werden. Daher ist es üblich Schalldämpfer in solchen Rohren anzuordnen, um den Schal, welcher sich in der Flüssigkeit ausbreitet, zu dämpfen, bevor dieser aus dem Boot gelangt.

Aus der DE 43 31 809 C2 ist ein rohrstutzenförmiger Schalldämpfer für ein strömungsfähiges Medium, vorzugsweise eine Flüssigkeit, bekannt.

Aus der DE 10 2007 045 266 A1 ist eine Dämpfungseinrichtung, insbesondere ein Pulsationsdämpfer bekannt.

Aus der US 2015 / 0 052 898 A1 sind Bauteile mit darin eingeschlossenen Schwingungsdämpfern und ein Verfahren zur Herstellung solcher Bauteile bekannt.

Bei den bisherigen Schalldämpfern findet keine gezielte Abstimmung zwischen Schallerzeuger und Schalldämpfer statt, sodass die Dämpfung der relevanten Frequenzen nicht in optimaler Form erfolgt.

Aufgabe der Erfindung ist es, einen auf die Schallquelle optimierten Schalldämpfer bereitzustellen und so die Schallemissionen und damit die akustische Signatur zu minimieren.

Gelöst wird diese Aufgabe durch das Verfahren mit den in Anspruch 1 angegebenen Merkmalen, den Flüssigkeitsschalldämpfer mit den in Anspruch 5 angegebenen Merkmalen sowie durch das Unterseeboot mit den in Anspruch 10 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zur Abstimmung des Dämpfungsverhaltens eines Flüssigkeitsschalldämpfers auf einen Schallerzeuger. Schallerzeuger ist hierbei breit zu verstehen, beispielsweise kann es sich um eine Pumpe handeln oder auch ein flüssigkeitsführendes Rohrleitungssystem mit mehreren angeschlossenen Baugruppen, die Schall in die Flüssigkeit einleiten und angeschlossenen Kompensatoren, die eine Vibrationsausbreitung verringern. Schallerzeuger und Flüssigkeitsschalldämpfer sind dabei im Betrieb über ein flüssigkeitsführendes Rohr miteinander verbunden. Der Flüssigkeitsschalldämpfer weist ein inneres Flüssigkeitsvolumen für eine durchfließende Flüssigkeit auf. Die Flüssigkeit fließt entweder zum Schallerzeuger oder kommt vom Schallerzeuger. Hierbei kann die Ummantelung des inneren Flüssigkeitsvolumens auch durch andere Komponenten gebildet werden. Das innere Flüssigkeitsvolumen ist somit im Sinne der Erfindung nur ein beispielsweise zylindrischer Hohlraum, durch den Flüssigkeit fließen kann, selbst aber keine eigene Wandung aufweisen muss. Dieses entspricht auch der bisherigen Bauweise von Flüssigkeitsschalldämpfern nach dem Stand der Technik. Der Flüssigkeitsschalldämpfer weist ein äußeres Gehäuse auf. Der Flüssigkeitsschalldämpfer weist im Inneren ein das innere Flüssigkeitsvolumen umgebendes Dämpfungselement auf. Das Verfahren weist die folgenden Schritte auf:
a) Ermitteln der Störfrequenzen des Schallerzeugers,
b) Abstimmung der Dämpfungscharakteristik des Dämpfungselements an die Störfrequenzen, wobei das Dämpfungselement (40) einen röhrenförmigen Grundkörper und außen um den röhrenförmigen Grundkörper angeordnete Stege aufweist, wobei die Abstimmung durch Anpassung der Höhe und der Abstände der Stege und damit der Ausnehmungen zwischen den Stegen in dem Dämpfungselement erfolgt.

Das Ermitteln der Störfrequenz kann entweder rechnerisch oder messtechnisch erfolgen.

Wesentlich ist also, dass im Gegensatz zur bisherigen Flüssigkeitsschalldämpfern eben nicht ein Breitbandschalldämpfer verwendet wird, sondern dass der Flüssigkeitsschalldämpfer exakt auf einen bestimmten Schallerzeuger abgestimmt wird. Hierdurch muss der Flüssigkeitsschalldämpfer eben nicht über ein breites Frequenzband alles dämpfen, um für verschiedene Schallerzeuger geeignet zu sein, sondern es kann auf die wesentliche Emission (Störfrequenzen) des Schallerzeugers abgestimmt werden, was wiederum dann bei den relevanten Frequenz zu einer besseren Dämpfung führt.

Ausnehmungen im Sinne der Erfindungen können zum einen makroskopische Hohlräume (Strukturen größer als 1 mm) sein, um beispielsweise Stege zu bilden. Zum anderen umfassen Ausnehmungen auch sehr kleine Hohlräume beispielsweise kleine Kanäle in einem mittels additiver Fertigungsverfahren hergestelltem Dämpfungselement, wobei die kleinen Hohlräume jeweils wenigstens eine durchgehende Verbindung zu wenigstens einem der makroskopischen Hohlräume aufweisen. Gerade diese kleinen Hohlräume können beispielsweise und insbesondere mittels additiver Fertigungstechniken hergestellt werden. Vorteil von großen Hohlräumen ist, dass über die geometrische Struktur der verbleibenden Bestandteile eine Frequenzanpassung erfolgen kann. Vorteil der kleinen Hohlräume ist, dass eine Anpassung der Elastizität in einfacher Weise möglich ist, ohne dass das Material selber verändert wird.

In einer weiteren Ausführungsform der Erfindung erfolgt die Anpassung der Dämpfungscharakteristik durch die Anpassung der Elastizität durch Erzeugung von Hohlräumen in dem Dämpfungselement. Die Elastizität des Materials des Dämpfungselements ist abhängig von Material und der Geometrie. Bei konstantem Material kann die Elastizität des Materials durch eingebrachte Hohlräume beeinflusst werden. Das Material des Dämpfungselements wird effektiv "weicher", wenn Hohlräume, beispielsweise Poren, hinzugeführt werden. Somit kann durch Schaffung von Hohlräumen die Dämpfungscharakteristik beeinflusst werden.

In einer weiteren Ausführungsform der Erfindung erfolgt die Berechnung der Dämpfungscharakteristik des Dämpfungselements als Einmassenschwinger.

Entsprechend wird eine Stegbauweise verwendet. Durch die Geometrie der Stegbauweise wird die Elastizität und damit das Schwingungsverhalten des Dämpfungselements gezielt verändert beziehungsweise eingestellt. Besonders bevorzugt ist das Dämpfungselement angrenzend an das innere Flüssigkeitsvolumen massiv ausgeführt und nach außen an das äußere Gehäuse angrenzend aus ringförmigen Stegen gebildet, sodass sich zwischen den ringförmigen Stegen bevorzugt ringförmige Hohlräume ergeben. Alternativ kann das Dämpfungselement an der Innen- und an der Außenseite massiv ausgeführt sein und dazwischen ringförmige Stege aufweisen.

In einer weiteren Ausführungsform der Erfindung werden nach der Anpassung 3D-Druckdaten zur Herstellung des Dämpfungselements erzeugt. Die Verwendung einer additiven Fertigungstechnik ermöglicht deutlich mehr Freiheiten bei der Anpassung im Vergleich zu anderen Herstellungsverfahren. Gleichzeitig können aber auch bei der Anpassung bereits die Restriktionen additiver Fertigungsverfahren berücksichtigt werden.

In einer weiteren Ausführungsform der Erfindung werden die Schritte a) und b) wiederholt und bei Abweichung der notwendigen Dämpfungscharakteristik von der bestehenden Dämpfungscharakteristik des in den Flüssigkeitsschalldämpfer eingesetzten bestehenden Dämpfungselements ein neues Dämpfungselement gefertigt und in den Flüssigkeitsschalldämpfer eingebaut. Dieses ist beispielsweise dann sinnvoll, wenn sich am Schallerzeuger etwas ändert.

In einer weiteren Ausführungsform der Ausführungsform kann am Ausgang des Flüssigkeitsschalldämpfers ein Sensor angebracht sein, der den Schall regelmäßig erfasst. Optional wird dieser Sensor nur nach der Montage eingesetzt, um die Wirksamkeit zu prüfen und gegebenenfalls ein neues Dämpfungselement auszulegen, zu fertigen und einzusetzen.

In einem weiteren Aspekt betrifft die Erfindung einen Flüssigkeitsschalldämpfer. Der Flüssigkeitsschalldämpfer weist ein inneres Flüssigkeitsvolumen für eine durchfließende Flüssigkeit auf. Hierbei kann die Ummantelung des inneren Flüssigkeitsvolumen auch durch andere Komponenten gebildet werden. Das innere Flüssigkeitsvolumen ist somit im Sinne der Erfindung nur ein zylindrischer Hohlraum, durch den Flüssigkeit fließen kann, selbst aber keine eigene Wandung aufweisen muss. Bevorzugt hat der zylindrische Hohlraum den gleichen Durchmesser, denn die Eingangs- und die Ausgangsöffnung hat, an die das Dämpfungselement angeschlossen wird, durch die somit das Fluid in das Dämpfungselement eintritt und dieses wieder verlässt. Dieses entspricht auch der bisherigen Bauweise von Flüssigkeitsschalldämpfern nach dem Stand der Technik. Der Flüssigkeitsschalldämpfer weist ein äußeres Gehäuse auf. Das äußere Gehäuse dient insbesondere der tragenden Struktur. Der Flüssigkeitsschalldämpfer weist ein das innere Flüssigkeitsvolumen umgebendes Dämpfungselement auf. Erfindungsgemäß weist das Dämpfungselemente einen röhrenförmigen Grundkörper und außen um den röhrenförmigen Grundkörper angeordnete Stege auf. Die Stege sind beabstandet und bilden so zwischen den Stegen Hohlräume. Die Hohlräume sind zur Anpassung der Dämpfungscharakteristik des Dämpfungselements ausgelegt, beziehungsweise die Dicke, Höhe und Position der Stege wird entsprechend angepasst, was wiederum identisch mit der Anpassung der Hohlräume ist. Somit handelt es sich eben nicht um einen universell einsetzbaren Flüssigkeitsschalldämpfer, sondern um einen insbesondere auf einen bestimmten Schallerzeuger abgestimmten Flüssigkeitsschalldämpfer mit optimalen Dämpfungseigenschaften für eben genau diesen Schallerzeuger.

Somit weist das Dämpfungselement auf der dem Gehäuse zugewandten Seite eine Stegstruktur auf. Bevorzugt ist das das innere Flüssigkeitsvolumen umgebende Dämpfungselement massiv und nach außen insbesondere an das äußere Gehäuse angrenzend aus ringförmigen Stegen gebildet, sodass sich zwischen den ringförmigen Stegen bevorzugt ringförmige Hohlräume ergeben. Eine Frequenzanpassung erfolgt in diesem Fall über die Breite und Höhe der Stege und damit der Hohlräume dazwischen.

In einer weiteren Ausführungsform der Erfindung weist das Dämpfungselement ein aktives Element auf. Das aktive Element dient dazu, die Dämpfungscharakteristik des Dämpfungselements dynamisch anpassen zu können. Beispielsweise kann über das aktive Element der Druck in den Hohlräumen eingestellt und so die Dämpfungscharakteristik gezielt eingestellt werden.

Besonders bevorzugt weist der Flüssigkeitsschalldämpfer ein aktives Element und einen Sensor auf, wobei der Sensor und das aktive Element über eine Steuervorrichtung miteinander verbunden sind. Hierdurch ist eine aktive Regelung möglich, um beispielsweise eine durch Lastveränderung veränderte Emissionscharakteristik besser kompensieren zu können.

In einer weiteren Ausführungsform der Erfindung weist das das innere Flüssigkeitsvolumen umgebende Dämpfungselement eine Gitterstruktur auf, bevorzugt in dem an das innere Flüssigkeitsvolumen angrenzenden Bereich. Beispielsweise kann bei der Herstellung des Dämpfungselements ein Gitterelement in das Dämpfungselement zur Verstärkung eingebaut werden. Beispielsweise kann die Gitterstruktur des Dämpfungselements quaderförmige Rahmenelemente aufweisen. Weiter bevorzugt sind die quaderförmigen Rahmenelemente innerhalb mit Querstreben versteift. Hierdurch kann bei einer additiven Herstellung Gewicht eingespart werden. Gleichzeitig ist durch Variation der Dicke der Streben eine direkte Anpassung der Elastizität des Materials möglich, ebenso durch die Anordnung der Streben. Weiter kann das Material so einfacher an die maximale Druckbelastung bei maximaler Tauchtiefe angepasst werden. Schäume oder ähnliche Materialien, die üblicherweise zur Dämpfung eingesetzt werden weisen innenliegende Gasblasen auf, die bei maximaler Tauchtiefe maximal komprimiert werden, wodurch sich die Form des Dämpfungselement und damit seine Dämpfungswirkung ändert.

In einer weiteren Ausführungsform der Erfindung weist das Dämpfungselement eine innere Verstärkung, insbesondere innere Versteifung, auf. Bevorzugt weist das Dämpfungselement eine Gitterstruktur auf. Diese Möglichkeit ist insbesondere durch additive Fertigungstechniken gegeben und ermöglicht eine zusätzliche Verbesserung der Anpassbarkeit.

In einer weiteren Ausführungsform der Erfindung ist das Dämpfungselement mittels additiver Fertigungstechniken hergestellt.

In einer weiteren Ausführungsform der Erfindung weist das Dämpfungselement auf der Seite zum inneren Flüssigkeitsvolumen eine geschlossene Oberfläche auf. Dadurch kann kein Wasser eindringen, beziehungsweise eine aufliegende Gummilage besser gehalten werden. Außerdem können Querkräfte durch die strömende Flüssigkeit so besser abgeführt werden.

In einer weiteren Ausführungsform der Erfindung weist das Dämpfungselement an den Stegen zu den Ausnehmungen jeweils eine geschlossene Oberfläche auf. Die geschlossenen Seitenwände dienen zur verbesserten Kraftübertragung zwischen dem röhrenförmigen Grundkörper und dem umgebenden Rohr.

In einer weiteren Ausführungsform der Erfindung weist das Dämpfungselement wenigstens an der den Ausnehmungen zugewandten Oberfläche des Grundkörpers Öffnungen auf. Dieses hat zwei Vorteile. Zum einen kann bei der additiven Fertigung durch die Öffnungen Material ausgetragen werden. Zum anderen können so gleichzeitig die Ausnehmungen wie auch die inneren Hohlräume mit einem nicht oder wenig kompressiblen Fluid gefüllt werden, beispielswiese Glycerin, um eine hohe Druckstabilität und damit gute Eingeschalten bei maximaler Tauchtiefe zu erreichen.

In einer weiteren Ausführungsform der Erfindung ist eine Gummilage zwischen dem Dämpfungselement und der Flüssigkeit im inneren Flüssigkeitsvolumen angeordnet, wobei das innere Flüssigkeitsvolumen selber keine Wandung aufweist. Durch die Gummilage ist ein Schutz des Dämpfungselements gegen das durchfließende Medium, insbesondere Meerwasser, möglich, wobei durch die Gummilage die Dämpfungswirkung nur geringfügig beeinflusst wird. Gummi oder Gummilage umfasst in diesem Zusammenhang Materialien wie beispielsweise natürlichen oder synthetischen kautschukelastischen Kunststoff aber auch andere Elastomere oder elastische Kunststoffe, die geeignete Übertragungseigenschaften haben, um die im inneren Flüssigkeitsvolumen auftretenden Schallschwingungen und Schallenergien an das Dämpfungselement zu übertragen.

In einer weiteren Ausführungsform der Erfindung ist das Dämpfungselement rotationssymmetrisch um die Längsachse des inneren Flüssigkeitsvolumens aufgebaut.

In einer weiteren Ausführungsform der Erfindung besteht das Dämpfungselement aus einem Thermoplast, beispielsweise aus Polyurethan.

In einem weiteren Aspekt betrifft die Erfindung ein Unterseeboot mit einem Schallerzeuger und einem erfindungsgemäßen Flüssigkeitsschalldämpfer. Der Schallerzeuger und der Flüssigkeitsschalldämpfer sind über ein flüssigkeitsführendes Flüssigkeitsvolumen miteinander verbunden. Bevorzugt ist das flüssigkeitsführende Flüssigkeitsvolumen auch mit der Umgebung des Unterseeboots, vorzugsweise vom Schallerzeuger aus gesehen hinter dem Flüssigkeitsschalldämpfer verbunden, sodass der Flüssigkeitsschalldämpfer zwischen dem Schallerzeuger und der Umgebung angeordnet ist.

Nachfolgend ist der erfindungsgemäße Flüssigkeitsschalldämpfer anhand eines in der Zeichnung dargestellten Ausführungsbeispiels näher erläutert.

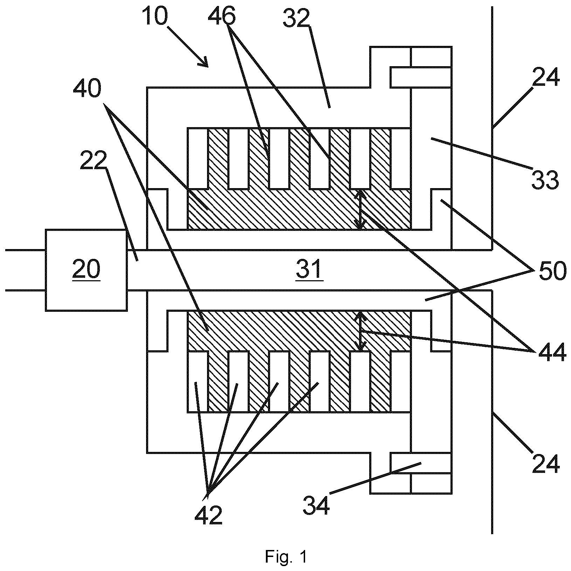

Fig. 1 beispielhafter Flüssigkeitsschalldämpfer

In Fig. 1 ist ein beispielhafter Flüssigkeitsschalldämpfer 10 gezeigt. Der Flüssigkeitsschalldämpfer 10 ist über ein Rohr 22 mit einem Schallerzeuger 20, beispielsweise einer Pumpe, und der Außenhaut 24 verbunden. Der Flüssigkeitsschalldämpfer 10 dämpft somit den vom Schallerzeuger 20 erzeugten und durch das Wasser im Rohr 22 übertragenen Schall, bevor dieser nach außen gelangt.

Der Flüssigkeitsschalldämpfer 10 weist dabei ein teilbares äußeres Gehäuse auf, welches aus einem ersten Teil 32 und einem zweien Teil 33 sowie Verbindungselementen 34, beispielsweise Schrauben, besteht.

Zwischen dem inneren Flüssigkeitsvolumen 30 und dem äußeren Gehäuse 32, 33, 34 ist das Dämpfungselement 40 angeordnet. Das Dämpfungselement 40 weist auf der Seite zum äußeren Gehäuse 32, 33, 34 Ausnehmungen 42 auf. Die Ausnehmungen 42 sind in Länge und Breite so abgestimmt, dass dadurch die Dämpfung der Störfrequenzen des Schallerzeugers 40 maximiert wird.

### Bezugszeichen

- 10: Flüssigkeitsschalldämpfer
- 20: Schallerzeuger
- 22: Rohr
- 24: Druckkörper
- 31: inneres Flüssigkeitsvolumen
- 32: erster Teil des äußeren Gehäuses
- 33: zweiter Teil des äußeren Gehäuses
- 34: Verbindungselement
- 40: Dämpfungselement
- 42: Hohlraum
- 44: röhrenförmiger Grundkörper
- 46: Steg
- 50: Gummilage

## Patentansprüche

1. Verfahren zur Abstimmung des Dämpfungsverhaltens eines Flüssigkeitsschalldämpfers (10) auf einen Schallerzeuger (20), wobei der Flüssigkeitsschalldämpfer (10) ein inneres Flüssigkeitsvolumen (31) für eine durchfließende Flüssigkeit aufweist, wobei der Flüssigkeitsschalldämpfer (10) ein äußeres Gehäuse (32, 33, 34) aufweist, wobei der Flüssigkeitsschalldämpfer (10) ein das innere Flüssigkeitsvolumen (31) umgebendes Dämpfungselement (40) aufweist, wobei das Verfahren die folgenden Schritte aufweist:
a) Ermitteln der Störfrequenz des Schallerzeugers (20),
b) Abstimmung der Dämpfungscharakteristik des Dämpfungselements (40) an die Störfrequenz, wobei das Dämpfungselement (40) einen röhrenförmigen Grundkörper (44) und außen um den röhrenförmigen Grundkörper (44) angeordnete Stege (46) aufweist, wobei die Abstimmung durch Anpassung der Höhe und der Abstände der Stege (46) und damit der Ausnehmungen zwischen den Stegen (46) in dem Dämpfungselement (40) erfolgt.

2. Verfahren nach Anspruch 1, **dadurch gekennzeichnet, dass** die Anpassung der Dämpfungscharakteristik an die Störfrequenz durch die Anpassung der Elastizität des Materials durch Erzeugung von Hohlräumen (42) erfolgt.

3. Verfahren nach einem der vorstehenden Ansprüche, **dadurch gekennzeichnet, dass** die Berechnung der Dämpfungscharakteristik des Dämpfungselements (40) als Einmassenschwinger erfolgt.

4. Verfahren nach einem der vorstehenden Ansprüche, **dadurch gekennzeichnet, dass** nach der Anpassung 3D-Druckdaten zur Herstellung des Dämpfungselements (40) erzeugt werden.

5. Flüssigkeitsschalldämpfer (10), wobei der Flüssigkeitsschalldämpfer (10) ein inneres Flüssigkeitsvolumen (31) für eine durchfließende Flüssigkeit aufweist, wobei der Flüssigkeitsschalldämpfer (10) ein äußeres Gehäuse (32, 33, 34) aufweist, wobei der Flüssigkeitsschalldämpfer (10) ein das innere Flüssigkeitsvolumen (31) umgebendes Dämpfungselement (40) aufweist, **dadurch gekennzeichnet, dass** das Dämpfungselemente (40) einen röhrenförmigen Grundkörper (44) und außen um den röhrenförmigen Grundkörper (44) angeordnete Stege (46) aufweist, wobei die Stege (46) beabstandet sind und so zwischen den Stegen (46) Hohlräume (42) erzeugen, wobei die Hohlräume (42) zur Anpassung der Dämpfungscharakteristik des Dämpfungselements (40) ausgelegt sind.

6. Flüssigkeitsschalldämpfer (10) nach Anspruch 5, **dadurch gekennzeichnet, dass** das Dämpfungselement (40) im Inneren eine Gitterstruktur aufweist.

7. Flüssigkeitsschalldämpfer (10) nach einem der Ansprüche 5 bis 6, **dadurch gekennzeichnet, dass** das Dämpfungselement (40) mittels additiver Fertigungstechniken hergestellt ist.

8. Flüssigkeitsschalldämpfer (10) nach einem der Ansprüche 5 bis 7, **dadurch gekennzeichnet, dass** das Dämpfungselement (40) auf der Seite zum inneren Flüssigkeitsvolumen (31) eine geschlossene Oberfläche aufweist.

9. Flüssigkeitsschalldämpfer (10) nach einem der Ansprüche 5 bis 8, **dadurch gekennzeichnet, dass** das Dämpfungselement (40) an den Stegen (46) zu den Hohlräumen (42) jeweils eine geschlossene Oberfläche aufweist.

10. Unterseeboot mit einem Schallerzeuger (20) und einem Flüssigkeitsschalldämpfer (10) nach einem der Ansprüche 5 bis 7, wobei der Schallerzeuger (20) und der Flüssigkeitsschalldämpfer (10) über ein flüssigkeitsführendes Flüssigkeitsvolumen (22) miteinander verbunden sind.
